# EUROPÄISCHE PATENTSCHRIFT

(11) **EP 2 912 711 B1**
(45) Veröffentlichungstag und Bekanntmachung des Hinweises auf die Patenterteilung: **19.12.2018**
(21) Anmeldenummer: 13753598.5
(22) Anmeldetag: 16.08.2013
(51) Int. Cl.: H01M 8/0276, H01M 8/0297, H01M 8/242, H01M 8/1004

(54) **MEMBRAN-ELEKTRODEN-ANORDNUNG SOWIE BRENNSTOFFZELLE MIT EINER SOLCHEN**
MEMBRANE ELECTRODE ASSEMBLY AND FUEL CELL COMPRISING ASSEMBLY OF THIS TYPE
ASSEMBLAGE MEMBRANE-ÉLECTRODES ET PILE À COMBUSTIBLE POURVUE D'UN TEL ASSEMBLAGE

(30) Priorität: 25.10.2012 DE 102012020947
(43) Veröffentlichungstag der Anmeldung: 02.09.2015
(73) Patentinhaber: AUDI AG, 85045 Ingolstadt (DE)
(72) Erfinder: ANDREAS-SCHOTT, Benno, 38524 Triangel (DE); HICKMANN, Thorsten, 37520 Osterode (DE)
(86) Internationale Anmeldenummer: PCT/EP2013/067155
(87) Internationale Veröffentlichungsnummer: WO 2014/063847

(56) Entgegenhaltungen:
- EP-A1- 1 341 249
- EP-A1- 1 367 301
- EP-A1- 1 391 956
- EP-A1- 1 624 511
- EP-A1- 1 693 915
- EP-A1- 2 405 516
- EP-A2- 1 291 946
- JP-A- 2003 068 319
- JP-A- 2003 068 319
- US-A1- 2003 091 885
- US-A1- 2003 186 105

## Beschreibung

Die Erfindung betrifft eine Membran-Elektroden-Anordnung für eine Brennstoffzelle, umfassend eine Membran-Elektroden-Einheit und eine einstückige Dichtung mit zwei Teilabschnitten. Zudem betrifft die Erfindung eine Brennstoffzelle umfassend eine Mehrzahl erfindungsgemäßer Membran-Elektroden-Anordnungen.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die so genannte Membran-Elektroden-Einheit (MEA für membrane electrode assembly), die ein Verbund aus einer ionen-, insbesondere protonenleitenden Membran und jeweils einer beidseitig an der Membran angeordneten Elektrode (Anode und Kathode) ist. Zudem kann die Membran-Elektroden-Einheit Gasdiffusionslagen umfassen, welche in der Regel beidseitig der Membran-Elektroden-Einheit an den, der Membran abgewandten Seiten der Elektroden angeordnet sind. In der Regel wird die Brennstoffzelle durch eine Vielzahl, im Stapel (stack) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter. Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den, über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die derzeit am weitesten entwickelte Brennstoffzellentechnologie basiert auf Polymerelektrolytmembranen (PEM), bei denen die Membran selbst aus einem Polymerelektrolyt besteht. Hierbei werden oft säuremodifizierte Polymere, insbesondere perfluorierte Polymere, eingesetzt. Der am weitesten verbreitete Vertreter dieser Klasse von Polymerelektrolyten ist eine Membran aus einem sulfonierten Polytetrafluorethylen-Copolymer (Handelsname: Nafion; Copolymer aus Tetrafluorethylen und einem Sulfonylsäurefluorid-Derivat eines Perfluoralkylvinylethers). Die elektrolytische Leitung findet dabei über hydratisierte Protonen statt, weshalb für die Protonenleitfähigkeit das Vorhandensein von Wasser Bedingung ist und im Betrieb der PEM-Brennstoffzelle ein Anfeuchten der Betriebsgase erforderlich ist. Aufgrund der Notwendigkeit des Wassers ist die maximale Betriebstemperatur dieser Brennstoffzellen bei Normdruck auf unter 100 °C beschränkt. In Abgrenzung von Hochtemperatur-Polymerelektrolytmembran-Brennstoffzellen (HT-PEM-Brennstoffzellen), deren elektrolytische Leitfähigkeit auf einem durch elektrostatische Komplexbindung an ein Polymergerüst der Polymerelektrolytmembran gebundenen Elektrolyten beruht (beispielsweise Phosphorsäure-dotierte Polybenzimidazol(PBI)-Membrane) und die bei Temperaturen von 160 °C betrieben werden, wird dieser Brennstoffzellentyp auch als Niedertemperatur-Polymerelektrolytmembran-Brennstoffzelle (NT-PEM-Brennstoffzelle) bezeichnet.

Wie einleitend erwähnt, wird die Brennstoffzelle durch eine Vielzahl, im Stapel angeordneter Einzelzellen gebildet, sodass von einem Brennstoffzellenstapel gesprochen wird. Zwischen den Membran-Elektroden-Einheiten sind in der Regel so genannte Bipolarplatten angeordnet, welche eine Versorgung der Einzelzellen mit den Betriebsmedien, also den Reaktanten und üblicherweise auch einer Kühlflüssigkeit sicherstellen. Zudem sorgen die Bipolarplatten für einen elektrisch leitfähigen Kontakt zu den Membran-Elektroden-Einheiten.

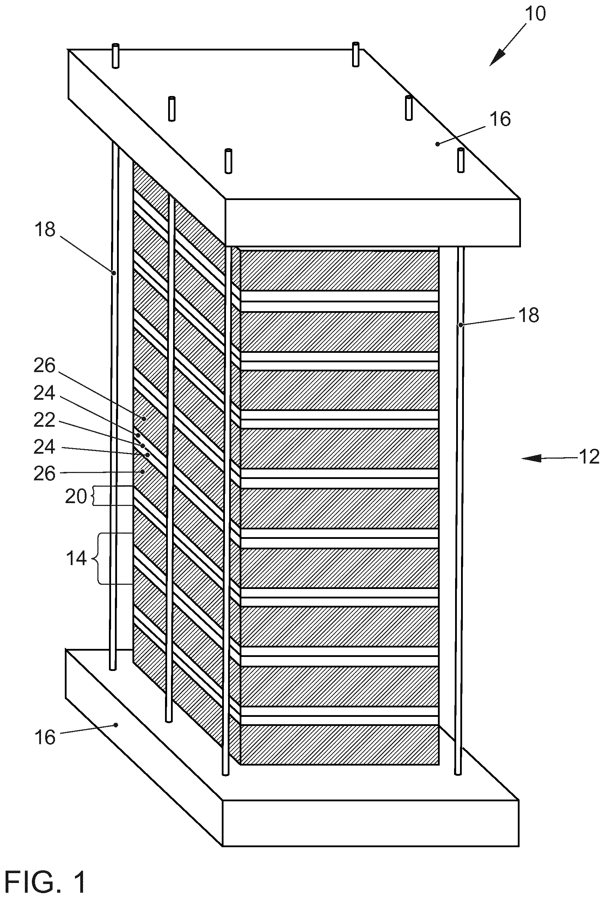

In Figur 1 ist schematisch eine Brennstoffzelle 10 dargestellt, welche einen Brennstoffzellenstapel 12 mit mehreren Einzelzellen 14, zwei Endplatten 16 und Zugelementen 18 umfasst. Die Einzelzellen 14 umfassen jeweils eine Membran-Elektroden-Einheit 20, mit einer protonenleitenden Membran 22 (Polymerelektrolytmembran) und beidseitig an der Membran 22 angeordneten Elektroden (Anode und Kathode; nicht dargestellt). Zudem kann die Membran-Elektroden-Einheit 20 beidseitig jeweils eine Gasdiffusionslage 24 umfassen, wobei dann die Elektroden zwischen der Membran 22 und den Gasdiffusionslagen 24 angeordnet sind. Die Elektroden können entweder beidseitig auf die Membran 22 beschichtet sein oder mit den Gasdiffusionslagen 24 als so genannte Gasdiffusionselektroden verbunden sein. Die Membran-Elektroden-Einheiten 20 sind wiederum zwischen Bipolarplatten 26 angeordnet. Die Bipolarplatten 26 versorgen die Membran-Elektroden-Einheiten 20 über deren Gasdiffusionslagen 24 mit den Reaktanten, wozu in der Regel geeignete Kanäle in den Bipolarplatten 26 vorgesehen sind. Zudem verbinden die Bipolarplatten 26 zwei angrenzende Membran-Elektroden-Einheiten 20 elektrisch leitfähig, wodurch diese in Reihe geschaltet sind. Die beiden endständigen Bipolarplatten 26 werden auch als Monopolarplatten bezeichnet, da diese nur einseitig die anschließende Membran-Elektroden-Einheit 20 versorgen und zu diesem Zweck nur auf einer ihrer Seiten über entsprechende Kanäle verfügen.

Zwischen den Membran-Elektroden-Einheiten 20 und den Bipolarplatten 26 sind hier nicht sichtbare Dichtungen angeordnet, welche die Anoden- und Kathodenräume nach außen abdichten und ein Austreten der Betriebsmedien aus dem Brennstoffzellenstapel 12 verhindern.

Um eine Funktionsfähigkeit der Dichtungen, sowie einen elektrisch leitfähigen Kontakt der Bipolarplatten 26 zu den Membran-Elektroden-Einheiten 20 auch bei Vibrationen zu gewährleisten, wird der Brennstoffzellenstapel 12 verpresst. Dies erfolgt in der Regel über zwei Endplatten 16, welche an beiden Enden des Brennstoffzellenstapels 12 angeordnet sind, in Kombination mit mehreren Zugelementen 18. Die Zugelemente 18 leiten Zugkräfte in die Endplatten 16, sodass die Endplatten 16 den Brennstoffzellenstapel 12 zusammenpressen.

Die Dichtungen, welche zwischen den Membran-Elektroden-Einheiten 20 und den Bipolarplatten 26 angeordnet sind, können seitens der Membran-Elektroden-Einheiten 20 und/oder der Bipolarplatten 26 vorgesehen sein und insbesondere mit diesen Komponenten verbunden sein.

Zu diesem Zweck kann die Dichtung ein- oder beidseitig auf die Bipolarplatte 26 aufvulkanisiert sein. Ferner kann die Dichtung in Form einer Dichtraupe auf der Bipolarplatte 26 mittels eines Roboters aufgetragen werden. Die mit dem Roboter aufgetragene Dichtung kann erhebliche Toleranzen aufweisen, welche zu Leckagen führen können. Diesem Problem wurde bisher durch eine Prozessoptimierung des Auftragens der Dichtraupe mit dem Roboter entgegengewirkt.

Die EP 2 201 157 B1 beschreibt eine Bipolarplatte mit einer Dichtungsnut in einem Randbereich der Bipolarplatte, in welche eine Dichtung, insbesondere ein O-Ring oder ein Dichtungsring und/oder eine applizierte Dichtung eingebracht ist. Die applizierte Dichtung kann aus einem weichen Kunststoff oder einem Elastomer zum Beispiel im Mehrkomponentenspritzgussverfahren in die Bipolarplatte integriert sein.

Bei solchen Dichtungsvarianten ist ein Versatz der Bipolarplatten mit dazwischen liegender Membran-Elektroden-Einheit ungünstig, da durch die versetzten Dichtungen die relativ weiche Membran-Elektroden-Einheit leicht verformt werden kann.

Die DE 20 2005 008 749 U1 beschreibt eine Membran-Elektroden-Einheit mit einer Polymermembran, welche beidseitig mit einer Elektrodenstruktur beschichtet ist und in einem Randbereich wenigstens einseitig zwischen den Elektrodenstrukturen hervorragt. Die Polymermembran ist teilweise in einen Dichtungskörper aus einem Elastomer-Material eingebettet. Die Einbettung erfolgt vorzugsweise durch Umspitzen oder Angießen des Dichtungskörpers. Zudem werden die Elektrodenstrukturen auf beiden Seiten der Polymermembran von dem Dichtungskörper überlappt. Der Randbereich der Polymermembran ist dabei insbesondere stoffschlüssig in den Dichtungskörper eingebettet. Der Dichtkörper kann Dichtstrukturen z. B. in Form von Dichtlippen oder Dichtnuten aufweisen, welche beispielsweise einen elektrochemisch aktiven Bereich der Membran-Elektroden-Einheit rahmenartig umgeben.

Die US 6,057,054 beschreibt eine Dichtung für eine Membran-Elektroden-Einheit welche in poröse Elektrodenschichten der Membran-Elektroden-Einheit eindringt. Die Dichtung wird z. B. mittels eines Spritzgussverfahrens, vorzugsweise durch Aufbringen eines Vakuums hergestellt.

Die EP 1 608 033 B1 schlägt eine Dichtung für eine Membran-Elektroden-Einheit mit einer verbesserten Rippenstruktur vor, welche sich durch zueinander versetzte Kammern auszeichnet. Dies bewirkt eine homogenere Steifigkeitsverteilung der Rippenstruktur. Die Dichtung umgreift einen, mit einer Imprägnierung versehenen Randbereich der Membran-Elektroden-Einheit.

Die EP 1 341 249 A1 offenbart eine Membran-Elektroden-Anordnung für eine Brennstoffzelle mit einer Membran, Elektroden und Gasdiffusionslagen. Beidseitig der Membran schließen Rahmen aus einem Harz-Film (z. B. PI, PEN, PET) an die Elektroden an und sind mit der Membran verbunden. Ebenfalls beidseitig der Membran angeordnete Dichtungen (z. B. Silikongummi, EPDM oder FKM) sind in die Rahmen und in den Gasdiffusionslagen durch Impregnierung eines Teils des flüssigen Gummis in die Rahmen und die Gasdiffusionslagen integriert. In einem peripheren Kantenbereich der Membran sind Durchgangslöcher durch die Membran und die Rahmen vorgesehen, durch welche die Dichtungen hindurch miteinander einstückig verbunden sind. Diese Durchgangslöcher sind entlang einer peripheren Kante der Membran in einem vorbestimmen Abstand vorgesehen.

Ferner wird auf die EP 2 405 516 A1 und EP 1 367 301 A1 verwiesen, welche PolymerElektrolyt-Brennstoffzellendichtungen mit jeweils zwei Dichtlippen offenbaren.

Der Erfindung liegt nun die Aufgabe zugrunde, eine Membran-Elektroden-Anordnung mit einer verbesserten Dichtung bereitzustellen.

Diese Aufgabe wird durch eine Membran-Elektroden-Anordnung mit den Merkmalen des Anspruchs 1 gelöst. Weitere bevorzugte Ausgestaltungen der Erfindung ergeben sich aus den übrigen, in den Unteransprüchen genannten Merkmalen.

Die erfindungsgemäße Membran-Elektroden-Anordnung für eine Brennstoffzelle umfasst eine Membran-Elektroden-Anordnung, welche eine Membran-Elektroden-Einheit und eine einstückige Dichtung mit einem ersten Teilabschnitt und einem zweiten Teilabschnitt umfasst. Die Membran-Elektroden-Einheit weist eine Perforation auf, entlang welcher sich die Dichtung beidseitig der Membran-Elektroden-Einheit erstreckt, wobei der erste Teilabschnitt der Dichtung auf einer ersten Flachseite und der zweite Teilabschnitt auf einer zweiten Flachseite der Membran-Elektroden-Einheit angeordnet ist und die beiden Teilabschnitte durch die Perforation hindurch einstückig miteinander verbunden sind. Kennzeichnend ist vorgesehen, dass die Dichtung je Teilabschnitt zwei Dichtlippen mit jeweils einer Dichtfläche aufweist und die Perforation zwischen den auf die Membran-Elektroden-Einheit normalprojizierten Dichtflächen angeordnet ist.

Durch die erfindungsgemäße Membran-Elektroden-Anordnung ist die Dichtung formschlüssig mit der Membran-Elektroden-Einheit verbunden. Typischerweise wird durch die Perforation und die durch die Perforation verlaufende Dichtung eine Vielzahl an formschlüssigen Verbindungsstellen zur Verfügung gestellt.

Die Membran-Elektroden-Einheit umfasst in der Regel eine Membran, welche zumindest teilweise zwischen zwei Elektroden angeordnet ist. Zudem kann die Membran-Elektroden-Einheit Gasdiffusionslagen umfassen, wobei die Membran mitsamt den zwei Elektroden zwischen den Gasdiffusionslagen angeordnet ist.

Bevorzugt umfassen Normalprojektionen der beiden Teilabschnitte auf die Membran-Elektroden-Einheit (MEA) einen deckungsgleichen Bereich, wobei die Membran-Elektroden-Einheit innerhalb des deckungsgleichen Bereichs die Perforation aufweist. Die Perforation umfasst durch die MEA durchgehende Ausnehmungen in beliebiger Form, z. B. kreisrund, in beliebiger Anordnung, also in regelmäßigen oder unregelmäßigen Abständen, und in beliebiger Anzahl, wenigstens jedoch eine Ausnehmung. Üblicherweise ist die Dichtung geschlossen umlaufend ausgebildet, sodass sie einen Teil der Membran-Elektroden-Einheit umschließt.

Die beiden Teilabschnitte erstrecken sich beidseitig der Membran-Elektroden-Einheit, indem sich der erste Teilabschnitt entlang einer ersten Hauptfläche (erste Flachseite) der Membran-Elektroden-Einheit und der zweite Teilabschnitt entlang einer zweiten Hauptfläche (zweite Flachseite) der Membran-Elektroden-Einheit erstrecken.

Bevorzugt weisen die beiden Teilabschnitte Dichtflächen auf und die Dichtflächen des ersten Teilabschnitts und des zweiten Teilabschnitts bilden im Wesentlichen deckungsgleiche Normalprojektionsbereiche auf der Membran-Elektroden-Einheit ab. Dichtflächen sind jene Flächen, welche dazu ausgebildet sind, an einer Gegenfläche z. B. einer Bipolarplatte anzuliegen und zu dichten. Insbesondere bevorzugt sind die Dichtflächen bezüglich der Membran-Elektroden-Einheit (bzw. einer in dieser liegenden Ebene) spiegelsymmetrisch ausgebildet.

Vorzugsweise weist die Membran-Elektroden-Einheit in einem Randbereich zumindest auf einer ihrer Flachseiten eine Randverstärkung auf, wobei sich die Dichtung entlang der Randverstärkung erstreckt. Durch die Randverstärkung kann der Randbereich der Membran-Elektroden-Einheit verstärkt werden. Insbesondere umfasst die Membran-Elektroden-Einheit auf beiden ihrer Flachseiten jeweils eine Randverstärkung, zwischen welchen die Membran der Membran-Elektroden-Einheit angeordnet ist. In diesem Fall erstrecken sich die beiden Teilabschnitte der Dichtung entlang den beiden Randverstärkungen.

Bevorzugte Materialien für die Randverstärkung sind Metall, Papier oder Kunststoff. Vorzugsweise ist die Randverstärkung eine Randverstärkungsfolie aus einem Kunststoff. Insbesondere ist die Randverstärkungsfolie eine PEN-Folie (Polyethylennaphthalat) oder die Randverstärkungsfolie umfasst PEN.

Gemäß einer bevorzugten Ausgestaltung der Erfindung weist die Membran-Elektroden-Einheit eine Zentrieröffnung zur Durchführung einer Zentrierstange auf und die Membran-Elektroden-Anordnung umfasst elektrisch isolierende Abstandselemente, welche um die Zentrieröffnung angeordnet sind und sich in einer Richtung rechtwinkelig zu einer flächigen Ausdehnung der Membran-Elektroden-Einheit erstrecken. Durch die Abstandselemente wird die Kurzschlusssicherheit erhöht, indem ein Kurzschluss zweier Bipolarplatten durch die Zentrieröffnung hindurch verhindert wird. Insbesondere sind die Abstandselemente aus dem gleichen Material wie die Dichtung ausgebildet. Die Abstandselemente können vorteilhaft im gleichen Spritzgussprozess gleichzeitig mit der Dichtung an die Membran-Elektroden-Einheit angespritzt werden. Dies resultiert in einer Kostenersparnis, da keine Isolierscheiben als extra Bauteile benötigt werden. Vorzugsweise sind die Abstandselemente beidseitig der Membran-Elektroden-Einheit angeordnet und insbesondere durch eine weitere Perforation hindurch einstückig miteinander verbunden. Bevorzugt umschließen die Abstandselemente die Zentrieröffnung ringsum.

Vorzugsweise ist ein chemisch aktiver Bereich der Membran-Elektroden-Einheit, welcher im Betrieb mit den Betriebsmedien beaufschlagt wird, von der Dichtung umlaufend umschlossen. Dadurch, dass die Dichtung den chemisch aktiven Bereich umschließt, werden Reaktanten und Reaktionsprodukte daran gehindert, aus einer Brennstoffzelle, welche die Membran-Elektroden-Anordnung umfasst, auszutreten.

Gemäß einer bevorzugten Ausgestaltung der Erfindung sind die Elektroden der Membran-Elektroden-Einheit zumindest im Wesentlichen innerhalb des von der Dichtung umlaufend umschlossenen, chemisch aktiven Bereichs angeordnet. Durch diese Ausgestaltung beschränkt sich eine Ausdehnung der Elektroden zumindest im Wesentlichen auf den chemisch aktiven Bereich, wodurch Material und Kosten gespart werden. Im Wesentlichen bedeutet in diesem Zusammenhang, dass eine Fläche der Elektroden außerhalb des chemisch aktiven Bereichs bevorzugt kleiner 30%, insbesondere bevorzugt kleiner 15% einer Fläche der Elektroden innerhalb des chemisch aktiven Bereichs entspricht. Insbesondere sind die Elektroden vollständig von der Dichtung ringsum umschlossen, d. h. außerhalb der Dichtung liegen keine Elektrodenflächen vor.

Vorzugsweise umfasst die Membran-Elektroden-Einheit Gasdiffusionslagen, welche innerhalb des von der Dichtung ringsum umschlossenen, chemisch aktiven Bereichs angeordnet sind. Nach dieser Ausgestaltung liegen somit auf dem Randbereich außerhalb der Dichtung keine Gasdiffusionslagen vor. Durch diese Ausgestaltung beschränken sich die Gasdiffusionslagen auf den chemisch aktiven Bereich innerhalb der Dichtung, wodurch Kosten gespart und eine Bauhöhe der Membran-Elektroden-Anordnung reduziert werden kann, da die Dichtung außerhalb der vergleichweise starkwandigen Gasdiffusionslagen angeordnet ist.

In besonders bevorzugter Ausgestaltung der Erfindung umfasst der Randbereich der Membran-Elektroden-Einheit, auf welchem die Dichtung angeordnet ist, lediglich die Membran und die vorzugsweise beidseitige Randverstärkung.

Bevorzugt weist die Membran-Elektroden-Einheit zumindest eine Öffnung zur Durchführung von Betriebsmedien auf, welche von der Dichtung umlaufend umschlossen ist. Öffnungen zur Durchführung von Betriebsmedien dienen zur Versorgung der Membran-Elektroden-Einheit mit Betriebsmedien. Dadurch kann der Brennstoffzellenstapel kompakt und platzsparend mit den Betriebsmedien versorgt werden. Die Betriebsmedien umfassen Reaktanten, also Brennstoff (z. B. Wasserstoff) und Oxidationsmittel (z. B. Sauerstoff oder Luft), sowie Kühlmedien, insbesondere Kühlflüssigkeit. Ferner können Reaktionsprodukte (z. B. Wasser) über die Kanäle der Membran-Elektroden-Einheit abgeführt werden.

Gemäß einer bevorzugten Ausgestaltung der Erfindung sind der chemisch aktive Bereich und die Öffnung zur Durchführung von Betriebsmedien von der Dichtung gemeinsam umlaufend umschlossen und einfach voneinander getrennt. Somit verläuft die Dichtung um die Öffnung zur Durchführung von Betriebsmedien und um den chemisch aktiven Bereich und trennt diese beiden voneinander. Die Öffnung zur Durchführung von Betriebsmedien und der chemisch aktive Bereich werden dabei durch die Dichtung nicht doppelt, sondern lediglich einfach voneinander getrennt.

Vorzugsweise ist die Dichtung stoffschlüssig mit der Membran-Elektroden-Einheit verbunden. Somit ist neben der formschlüssigen Verbindung zwischen Dichtung und Membran-Elektroden-Einheit zusätzlich auch eine stoffschlüssige Verbindung zwischen Dichtung und Membran-Elektroden-Einheit realisiert. Dies ist typischerweise durch ein Anspritzen der Dichtung an die Membran-Elektroden-Einheit unter teilweisem Anschmelzen der betroffenen Materialien realisierbar.

Die Dichtung weist zwei Dichtlippen auf, die durch eine entsprechende Profilierung der Teilabschnitte gebildet werden. Dadurch bilden sich zwei voneinander unabhängige Dichtungslinien, also real zwei Dichtbereiche, welche eine doppelte Sicherheit gegen Leckage bewirken. Typischerweise laufen die zwei Dichtlippen rings um einen abgedichteten Bereich.

Ferner wird eine Brennstoffzelle zur Verfügung gestellt. Die Brennstoffzelle umfasst eine Mehrzahl abwechselnd gestapelter Bipolarplatten und erfindungsgemäßer Membran-Elektroden-Anordnungen. Typischerweise dichten die Teilabschnitte der Dichtungen Räume zwischen den Membran-Elektroden-Einheiten und den Bipolarplatten ab. Durch die erfindungsgemäßen Membran-Elektroden-Anordnungen wird eine besonders sichere Fixierung der Dichtungen innerhalb der Brennstoffzelle ermöglicht. Dadurch, dass die Dichtung formschlüssig mit der Membran-Elektroden-Einheit verbunden ist, können bei einer Montage oder während eines Betriebes der Brennstoffzelle die beiden Teilabschnitte der Dichtung nicht auf der Membran-Elektroden-Einheit verrutschen.

Vorzugsweise greifen die beiden Teilabschnitte einer Dichtung in Nuten der zugeordneten Bipolarplatten ein. Typischerweise befindet sich ein Dichtbereich zwischen der Dichtung und den zugeordneten Bipolarplatten an einem Nutgrund der Nut. Somit ist eine formschlüssige Fixierung der Dichtungen innerhalb der Bipolarplatten gegeben.

Des Weiteren wird ein Fertigungsverfahren einer erfindungsgemäßen Membran-Elektroden-Anordnung zur Verfügung gestellt, welches die folgenden Schritte umfasst:
1) Einlegen der Membran-Elektroden-Einheit in ein geöffnetes Spritzgusswerkzeug einer Spritzgussmaschine;
2) Schließen des Spritzgusswerkzeuges;
3) Einspritzen eines Reaktionsgemischs, umfassend ein zu vernetzendes Polymer oder Monomere und ggf. ein Vernetzungsmittel in das Spritzgusswerkzeug;
4) Erwärmen des Reaktionsgemischs über eine vordefinierte Dauer zum Auslösen der Vernetzung und/oder der Polymerisation;
5) Öffnen des Spritzgusswerkzeuges und
6) Entnehmen der Membran-Elektroden-Anordnung.

Des Weiteren wird ein Kraftfahrzeug umfassend die erfindungsgemäße Brennstoffzelle zur Verfügung gestellt. Die Brennstoffzelle dient vorzugsweise zur Versorgung eines Elektroantriebs des Kraftfahrzeugs mit elektrischem Strom.

Die Erfindung wird nachfolgend in Ausführungsbeispielen anhand der zugehörigen Zeichnungen erläutert. Es zeigen:
- Figur 1: eine Brennstoffzelle,
- Figur 2: eine Tragestruktur der erfindungsgemäßen Membran-Elektroden-Anordnung in einer perspektivischen Ansicht und
- Figur 3: eine erfindungsgemäße Membran-Elektroden-Anordnung in einer Normalansicht mit vergrößerten Detail- und Schnittansichten.

Auf Figur 1 wurde bereits zur Erläuterung des Standes der Technik eingegangen. Die erfindungsgemäße Brennstoffzelle kann grundsätzlich einen Aufbau gemäß Figur 1 aufweisen, enthält jedoch Membran-Elektroden-Anordnungen gemäß der vorliegenden Erfindung.

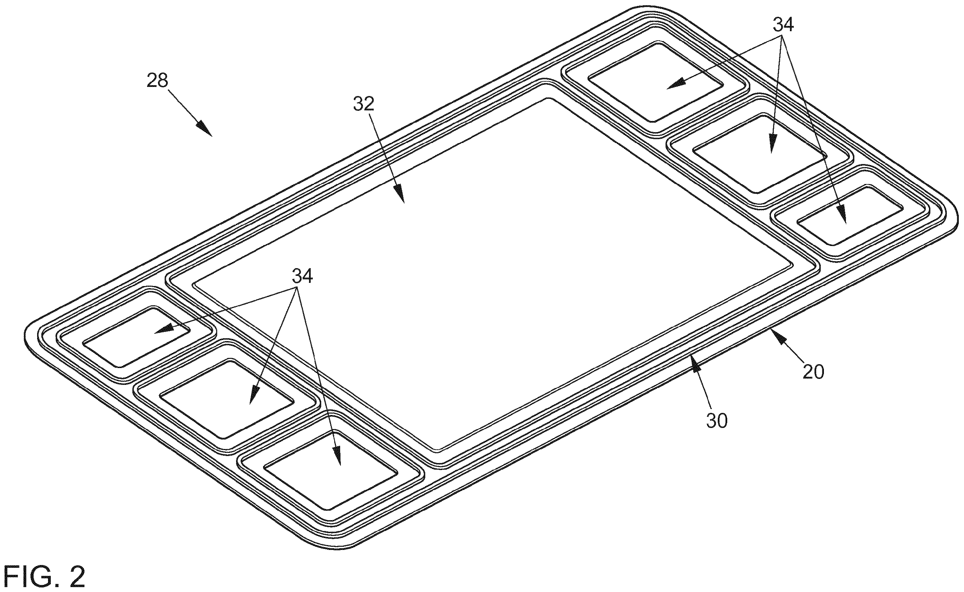

Figur 2 zeigt eine perspektivische Ansicht einer erfindungsgemäßen Membran-Elektroden-Anordnung 28 in einer bevorzugten Ausgestaltung der Erfindung. Die Membran-Elektroden-Anordnung 28 umfasst eine Membran-Elektroden-Einheit 20 (MEA) und eine Dichtung 30. Die Membran-Elektroden-Einheit 20 weist typischerweise einen chemisch aktiven Bereich 32 auf und kann ferner auch Öffnungen 34 zur Durchführung von Betriebsmedien aufweisen.

Der chemisch aktive Bereich 32 und eine die Öffnungen 34 zur Durchführung von Betriebsmedien können wie gezeigt von der Dichtung 30 gemeinsam umlaufend umschlossen und durch diese einfach voneinander getrennt sind.

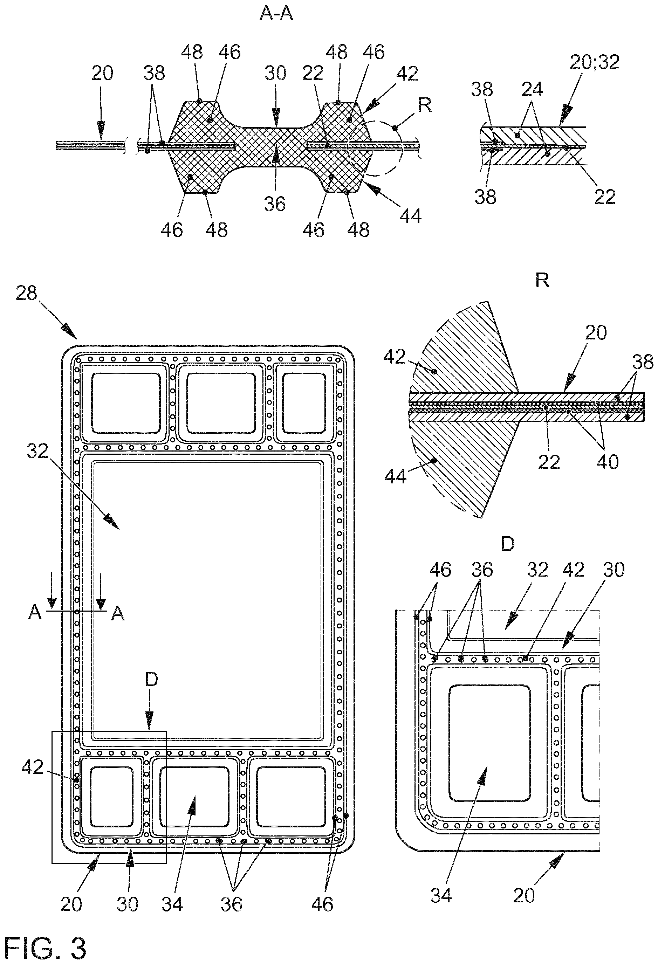

Nachfolgend werden anhand von Figur 3 weitere Details zum Aufbau der in Figur 2 gezeigten Membran-Elektroden-Anordnung 28 erläutert. Figur 3 zeigt dazu eine erfindungsgemäße Membran-Elektroden-Anordnung 28 in einer Normalansicht mit vergrößerten Detail- und Schnittansichten in einer bevorzugten Ausgestaltung der Erfindung.

Zusätzlich zur in Figur 2 gezeigten Darstellung ist schematisch eine in der Draufsicht eigentlich von der Dichtung 30 verdeckte Perforation 36 der Membran-Elektroden-Einheit 20 dargestellt, welche in der Detailansicht D vergrößert dargestellt ist. Die Perforation 36 kann eine Vielzahl, in regelmäßigen Abständen angeordnete Aussparungen umfassen, welche die Membran-Elektroden-Einheit 20 durchdringen. Die Aussparungen können z. B. wie gezeigt eine kreisrunde Gestalt aufweisen und sind auf einen jeweiligen Anwendungsfall abgestimmt.

In der Schnittdarstellung A-A entsprechend einer Schnittebene durch eine der Aussparungen der Perforation 36 ist der Aufbau der Membran-Elektroden-Einheit 20 und der Dichtung 30 ersichtlich.

Die Membran-Elektroden-Einheit 20 umfasst in ihrem chemisch aktiven Bereich typischerweise eine Membran 22 (Polymerelektrolytmembran), welche zwischen zwei nicht dargestellten Elektroden (Anode oder Kathode) angeordnet ist, die als katalytische Beschichtung der Membran 22 ausgeführt sein können. Die Membran-Elektroden-Einheit 20 kann wie gezeigt zudem zwei Gasdiffusionslagen 24 umfassen, welche an die Membran 22 mitsamt Elektroden angrenzen. Nach der in Figur 3 gezeigten bevorzugten Ausgestaltung der Erfindung beschränken sich die Elektroden und die Gasdiffusionslagen 24 auf den chemisch aktiven Bereich 32. Dadurch kann Material für die Elektroden und die Gasdiffusionslagen 24 eingespart werden. Typischerweise verläuft die Membran 22 flächig durch den chemisch aktiven Bereich 32 und geht nahtlos in einen Randbereich der Membran-Elektroden-Einheit 20 über.

In dem Randbereich ist die Membran 22 der Membran-Elektroden-Einheit 20 zwischen zwei Randverstärkungsfolien 38 angeordnet, welche eine sogenannte Randverstärkung bilden. Die Randverstärkungsfolien 38 dienen der mechanischen Stabilisierung der typischerweise sehr dünnen und nachgiebigen Membran 22. Im gezeigten Fall dient die Randverstärkung zudem als Träger der Dichtung 30. Dieser detaillierte Aufbau ist insbesondere in der verglichen mit der Schnittdarstellung A-A abermals vergrößerten Detailansicht R ersichtlich. Die Randverstärkungsfolien 38 können PEN-Folien (Polyethylennaphthalat) sein oder PEN umfassen. Mittels eines Klebers 40, z. B. eines Acrylklebers, können die Randverstärkungsfolien 38 ferner mit der Membran 22 stoffschlüssig verbunden sein.

Um einen möglichst stabilen Übergang zwischen dem chemisch aktiven Bereich 32 und den Randbereich zu ermöglichen, weist die Membran-Elektroden-Einheit 20 einen Übergangsbereich auf, in welchem sich die Randverstärkungsfolien 38 und die Gasdiffusionslagen 24 überlappen.

In der Schnittdarstellung A-A ist ferner die Dichtung 30 geschnitten dargestellt. Die Dichtung 30 umfasst einen ersten Teilabschnitt 42, welcher auf einer ersten Flachseite der Membran-Elektroden-Einheit 20 angeordnet ist und einen zweiten Teilabschnitt 44, welcher auf einer zweiten Flachseite der Membran-Elektroden-Einheit 20 angeordnet ist. Die beiden Teilabschnitte 42, 44 sind durch die Perforation 36 hindurch einstückig miteinander verbunden. Über die Aussparungen der Perforation 36 erfolgt eine formschlüssige mechanische Anbindung der Dichtung 30 an die Membran-Elektroden-Einheit 20. In der Schnittdarstellung A-A ist der erste Teilabschnitt 42 oberhalb der Membran-Elektroden-Einheit und der zweite Teilabschnitt 44 unterhalb der Membran-Elektroden-Einheit angeordnet. Die beiden Teilabschnitte 42, 44 bilden eine Profilierung, nämlich wie gezeigt jeweils zwei Dichtlippen 46 aus, wobei jede der Dichtlippen 46 eine Dichtfläche 48 aufweist.

In der gezeigten Ausgestaltung weisen die Dichtflächen 48 des ersten Teilabschnitts 42 und des zweiten Teilabschnitts 44 im Wesentlichen deckungsgleiche Normalprojektionsbereiche auf der Membran-Elektroden-Einheit auf. Die beiden Teilabschnitte 42, 44 sind bezüglich einer Spiegelebene, welche in diesem Fall durch die Membran 22 verläuft, spiegelsymmetrisch. Dadurch wird bei einem Zusammenpressen der Dichtung 30 innerhalb einer Brennstoffzelle 10 eine Verformung der Membran-Elektroden-Einheit 20 verhindert oder zumindest vermindert.

Die Membran-Elektroden-Einheit 20 kann eine nicht dargestellte Zentrieröffnung zur Durchführung einer Zentrierstange aufweisen. Um diese Zentrieröffnung herum können beidseitig der Membran-Elektroden-Einheit 20 elektrisch isolierende Abstandselemente auf der Membran-Elektroden-Einheit 20 und insbesondere auf den Randverstärkungsfolien 38 angeordnet sein. Ein Aufbringen der elektrisch isolierenden Abstandselemente erfolgt vorzugsweise im selben Fertigungsschritt wie das Aufbringen der Dichtung 30. Insbesondere können die Abstandselemente aus dem gleichen Material wie die Dichtung 30 bestehen. Analog zur Dichtung 30 können die Abstandselemente geschlossen um die Zentrieröffnung umlaufen und über eine weitere Perforation einstückig miteinander verbunden sein. Durch die elektrisch isolierenden Abstandselemente wird innerhalb einer Brennstoffzelle 10 ein elektrisch leitfähiger Kontakt von an die Membran-Elektroden-Anordnung 28 angrenzenden Bipolarplatten 26 verhindert. Die Bipolarplatten 26 könnten ohne Abstandselemente durch die Zentrieröffnung hindurchragen und sich kontaktieren, wodurch es zu einem Kurzschluss kommen könnte.

Die erfindungsgemäße Membran-Elektroden-Anordnung 28 kann hergestellt werden, indem beispielsweise die profilierte Dichtung auf die Randverstärkung der Membran-Elektroden-Einheit 20 angespritzt (die Membran-Elektroden-Einheit 20 umspritzt) wird. Dazu wird die Membran-Elektroden-Einheit 20 in ein geöffnetes Spritzgusswerkzeug einer Spritzgussmaschine eingelegt. Anschließend wird das Spritzgusswerkzeug geschlossen und ein unvernetztes Polymer oder Monomere zur Erzeugung des Elastomers der Dichtung 30 in das Spritzgusswerkzeug eingespritzt. Danach folgt ein Erwärmen (Aufheizen) des Polymers der Dichtung 30 über eine vordefinierte Dauer, um die Vernetzung und/oder Polymerisation auszulösen, bevor das Spritzgusswerkzeug geöffnet und die Membran-Elektroden-Anordnung 28 entnommen wird. Durch diesen Anspritzvorgang kann insbesondere eine stoffschlüssige Verbindung zwischen der Dichtung 30 und der Membran-Elektroden-Einheit 20, im gezeigten Fall den Randverstärkungsfolien 38 erzielt werden.

Bei einer Anordnung der erfindungsgemäßen Membran-Elektroden-Anordnung 28 in einer Brennstoffzelle 10, sind abwechselnd Membran-Elektroden-Anordnungen 28 und Bipolarplatten 26 zu einem Brennstoffzellenstapel 12 aufeinandergestapelt. Die erfindungsgemäße Brennstoffzelle 10 kann wie bereits erörtert grundsätzlich einen Aufbau gemäß Figur 1 aufweisen, enthält jedoch die erfindungsgemäßen Membran-Elektroden-Anordnungen 28 gemäß der vorliegenden Erfindung. Der Brennstoffzellenstapel 12 ist verpresst, sodass die Dichtungen 30 der Membran-Elektroden-Anordnungen 28 komprimiert werden. Dadurch dichten die Dichtungen 30, insbesondere deren Teilabschnitte 42, 44 an deren Dichtflächen 48 Räume zwischen jeweils einer Membran-Elektroden-Anordnung 28 und einer Bipolarplatte 26 ringsum ab. Die Räume umfassen insbesondere die chemisch aktiven Bereiche 32 und die Öffnungen zur Durchführung von Betriebsmedien 34.

Dies erfolgt bevorzugt, indem die beiden Teilabschnitte 42, 44 in Nuten der Bipolarplatten eingreifen, also zumindest teilweise in diesen angeordnet sind und insbesondere indem die Dichtflächen 48 gegen einen Nutgrund der Nuten gepresst sind. Dadurch sind zusätzlich zu den formschlüssigen Verbindungen der Dichtungen 30 mit den Membran-Elektroden-Einheiten 20 auch formschlüssige Verbindungen der Dichtungen 30 mit den angrenzenden Bipolarplatten 26 gegeben. Die Dichtungen 30 sind somit gegenüber einem Versatz der Membran-Elektroden-Anordnung 28 zu den Bipolarplatten 26 unempfindlich, da die Dichtlippen gegen die Dichtnut in den biegesteifen Bipolarplatten abschließen.

Mittels der Dichtung 30 ist eine Abdichtung eines insbesondere metallischen Brennstoffzellenstapels 12 mit einem Zellabstand (Normalabstand von der Mitte einer Bipolarplatte 26 bis zur Mitte der nächstgelegenen Bipolarplatte 26 mit dazwischenliegender Membran-Elektroden-Anordnung 28) von ca. 1 mm realisierbar. Daraus resultiert eine Höhe eines Teilabschnitts 42, 44 der Dichtung 30 von nur ca. 0,4 mm zwischen der Randverstärkung und der Bipolarplatte im verpressten Zustand.

### Bezugszeichenliste

- 10: Brennstoffzelle
- 12: Brennstoffzellenstapel
- 14: Einzelzelle
- 16: Endplatte
- 18: Zugelement
- 20: Membran-Elektroden-Einheit
- 22: Membran
- 24: Gasdiffusionslage
- 26: Bipolarplatte
- 28: Membran-Elektroden-Anordnung
- 30: Dichtung
- 32: chemisch aktiver Bereich
- 34: Öffnung zur Durchführung von Betriebsmedien
- 36: Perforation
- 38: Randverstärkungsfolie
- 40: Kleber
- 42: erster Teilabschnitt
- 44: zweiter Teilabschnitt
- 46: Dichtlippe
- 48: Dichtfläche

## Patentansprüche

1. Membran-Elektroden-Anordnung (28) für eine Brennstoffzelle (10), umfassend eine Membran-Elektroden-Einheit (20) und eine einstückige Dichtung (30) mit einem ersten Teilabschnitt (42) und einem zweiten Teilabschnitt (44), wobei die Membran-Elektroden-Einheit (20) eine Perforation (36) aufweist, entlang welcher sich die Dichtung (30) beidseitig der Membran-Elektroden-Einheit (20) erstreckt, wobei der erste Teilabschnitt (42) der Dichtung (30) auf einer ersten Flachseite und der zweite Teilabschnitt (44) auf einer zweiten Flachseite der Membran-Elektroden-Einheit (20) angeordnet ist und die beiden Teilabschnitte (42, 44) durch die Perforation (36) hindurch einstückig miteinander verbunden sind,
**dadurch gekennzeichnet, dass**
die Dichtung (30) je Teilabschnitt (42, 44) zwei Dichtlippen (46) mit jeweils einer Dichtfläche (48) aufweist und die Perforation (36) zwischen den auf die Membran-Elektroden-Einheit (20) normalprojizierten Dichtflächen (48) angeordnet ist.

2. Membran-Elektroden-Anordnung (28) nach Anspruch 1, wobei die beiden Teilabschnitte (42, 44) Dichtflächen (48) aufweisen und die Dichtflächen (48) des ersten Teilabschnitts (42) und des zweiten Teilabschnitts (44) im Wesentlichen deckungsgleiche Normalprojektionsbereiche auf der Membran-Elektroden-Einheit (20) abbilden.

3. Membran-Elektroden-Anordnung (28) nach einem der vorhergehenden Ansprüche, wobei die Membran-Elektroden-Einheit (20) in einem Randbereich zumindest auf einer ihrer Flachseiten eine Randverstärkung (38) aufweist, wobei sich die Dichtung (30) entlang der Randverstärkung (38) erstreckt.

4. Membran-Elektroden-Anordnung (28) nach einem der vorhergehenden Ansprüche, wobei ein chemisch aktiver Bereich (32) der Membran-Elektroden-Einheit (20) von der Dichtung (30) umlaufend umschlossen ist.

5. Membran-Elektroden-Anordnung (28) nach Anspruch 4, wobei die Elektroden der Membran-Elektroden-Einheit (20) innerhalb des von der Dichtung (30) umlaufend umschlossenen, chemisch aktiven Bereichs (32) angeordnet sind.

6. Membran-Elektroden-Anordnung (28) nach einem der Ansprüche 4 oder 5, wobei die Membran-Elektroden-Einheit Gasdiffusionslagen (24) umfasst, welche innerhalb des von der Dichtung (30) umlaufend umschlossenen, chemisch aktiven Bereichs (32) angeordnet sind.

7. Membran-Elektroden-Anordnung (28) nach einem der vorhergehenden Ansprüche, wobei die Membran-Elektroden-Einheit (20) zumindest eine Öffnung (34) zur Durchführung von Betriebsmedien aufweist, welche von der Dichtung (30) umlaufend umschlossen ist.

8. Brennstoffzelle (10) umfassend eine Mehrzahl abwechselnd gestapelter Bipolarplatten (26) und Membran-Elektroden-Anordnungen (28) nach einem der vorhergehenden Ansprüche.

9. Brennstoffzelle (10) nach Anspruch 8, wobei die Bipolarplatten (26) Nuten aufweisen, in welche die Teilabschnitte (42, 44) der Dichtung (30) eingreifen.

## Claims

1. Membrane electrode arrangement (28) for a fuel cell (10), comprising a membrane electrode unit (20) and an integral seal (30) with a first part section (42) and a second part section (44), wherein the membrane electrode unit (20) has a perforation (36) along which the seal (30) extends on both sides of the membrane electrode unit (20), wherein the first part section (42) of the seal (30) is disposed on a first flat side and the second part section (44) is disposed on a second flat side of the membrane electrode unit (20) and the two part sections (42, 44) are connected integrally with one another through the perforation (36),
**characterised in that**
the seal (30) has per part section (42, 44) two sealing lips (46) each having a sealing surface (48) and the perforation (36) is disposed between the sealing surfaces (48) normally projected onto the membrane electrode unit (20).

2. Membrane electrode arrangement (28) according to claim 1, wherein the two part sections (42, 44) have sealing surfaces (48) and the sealing surfaces (48) of the first part section (42) and of the second part section (44) form substantially congruent normal projection regions on the membrane electrode unit (20).

3. Membrane electrode arrangement (28) according to any of the preceding claims, wherein the membrane electrode unit (20) in an edge area at least on one of its flat sides has an edge reinforcement (38), wherein the seal (30) extends along the edge reinforcement (38).

4. Membrane electrode arrangement (28) according to any of the preceding claims, wherein a chemically active region (32) of the membrane electrode unit (20) is circumferentially enclosed by the seal (30).

5. Membrane electrode arrangement (28) according to claim 4, wherein the electrodes of the membrane electrode unit (20) are disposed within the chemically active region (32) circumferentially enclosed by the seal (30).

6. Membrane electrode arrangement (28) according to any of claims 4 or 5, wherein the membrane electrode unit comprises gas diffusion layers (24) which are disposed within the chemically active region (32) circumferentially enclosed by the seal (30).

7. Membrane electrode arrangement (28) according to any of the preceding claims, wherein the membrane electrode unit (20) has at least one opening (34) for guiding through operating media, which is circumferentially enclosed by the seal (30).

8. Fuel cell (10) comprising a plurality of alternatingly stacked bipolar plates (26) and membrane electrode arrangements (28) according to any of the preceding claims.

9. Fuel cell (10) according to claim 8, wherein the bipolar plates (26) have grooves in which the part sections (42, 44) of the seal (30) engage.

## Revendications

1. Assemblage membrane-électrodes (28) pour une pile à combustible (10), comprenant une unité membrane-électrodes (20) et un joint d'étanchéité monobloc (30) avec un premier tronçon partiel (42) et un deuxième tronçon partiel (44), dans lequel l'unité membrane-électrodes (20) présente une perforation (36), le long de laquelle le joint d'étanchéité (30) s'étend des deux côtés de l'unité membrane-électrodes (20), dans lequel le premier tronçon partiel (42) du joint d'étanchéité (30) est agencé sur un premier côté plat et le deuxième tronçon partiel (44) est agencé sur un deuxième côté plat de l'unité membrane-électrodes (20) et les deux tronçons partiels (42, 44) sont reliés l'un à l'autre d'un seul tenant à travers la perforation (36),
**caractérisé en ce que**
le joint d'étanchéité (30) présente deux lèvres d'étanchéité (46) par tronçon partiel (42, 44) avec respectivement une surface d'étanchéité (48) et la perforation (36) est agencée entre les surfaces d'étanchéité (48) projetées normalement sur l'unité membrane-électrodes (20).

2. Assemblage membrane-électrodes (28) selon la revendication 1, dans lequel les deux tronçons partiels (42, 44) présentent des surfaces d'étanchéité (48) et les surfaces d'étanchéité (48) du premier tronçon partiel (42) et du deuxième tronçon partiel (44) représentent des zones de projection normale avec sensiblement la même couverture sur l'unité membrane-électrodes (20).

3. Assemblage membrane-électrodes (28) selon l'une quelconque des revendications précédentes, dans lequel l'unité membrane-électrodes (20) présente dans une zone de bord au moins sur un de ses côtés plats, un renfort de bord (38), dans lequel le joint d'étanchéité (30) s'étend le long du renfort de bord (38).

4. Assemblage membrane-électrodes (28) selon l'une quelconque des revendications précédentes, dans lequel une zone chimiquement active (32) de l'unité membrane-électrodes (20) est entourée sur le pourtour par le joint d'étanchéité (30).

5. Assemblage membrane-électrodes (28) selon la revendication 4, dans lequel les électrodes de l'unité membrane-électrodes (20) sont agencées à l'intérieur de la zone chimiquement active (32), entourée sur le pourtour par le joint d'étanchéité (30).

6. Assemblage membrane-électrodes (28) selon l'une quelconque des revendications 4 ou 5, dans lequel l'unité membrane-électrodes comprend des couches de diffusion de gaz (24), lesquelles sont agencées à l'intérieur de la zone chimiquement active (32), entourée sur le pourtour par le joint d'étanchéité (30).

7. Assemblage membrane-électrodes (28) selon l'une quelconque des revendications précédentes, dans lequel l'unité membrane-électrodes (20) présente au moins une ouverture (34) pour le passage de fluides d'exploitation, laquelle est entourée sur le pourtour par le joint d'étanchéité (30).

8. Pile à combustible (10) comprenant une pluralité de plaques bipolaires (26) et d'assemblages membrane-électrodes (28) selon l'une quelconque des revendications précédentes empilés en alternance.

9. Pile à combustible (10) selon la revendication 8, dans laquelle les plaques bipolaires (26) présentent des rainures, dans lesquelles les tronçons partiels (42, 44) du joint d'étanchéité (30) entrent en prise.
